# EUROPEAN PATENT APPLICATION

(11) **EP 4 760 201 A1**
(43) Date of publication of application: **17.06.2026**
(21) Application number: 24218750.8
(22) Date of filing: 10.12.2024
(51) Int. Cl.: G01B 11/25

(54) **METHODS, IMAGE SENSOR AND 3D IMAGING SYSTEM BASED ON LIGHT TRIANGULATION FOR PROVISION OF PIXEL VALUES USING REGION OF INTERESTS**

(71) Applicant: Sick IVP AB, 583 30 Linköping (SE)
(72) Inventor: MELANDER, Johan, 583 34 Linköping (SE); EDHAMMER, Jens, 587 34 Linköping (SE); MURHED, Anders, 582 46 Linköping (SE)
(74) Representative: Bergenstråhle & Partners AB

(57) **Abstract**

Methods, image sensor (331; 631; 800), imaging system (605) for 3D imaging based on light triangulation comprising the image sensor, relating to provision of pixels values of image sensor pixels of a second Region Of Interest, ROI, (465; 465'; 565) based on a first ROI (365; 365'). The first ROI (365; 365') used by the image sensor (331; 631; 800) to provide first pixel values of image sensor pixels of the first ROI (365; 365') resulting from a first exposure. The second ROI (465; 465'; 565) is determined (702) according to a predetermined relation that the second ROI (465; 465'; 565) shall have to the first ROI (365; 365'). A second exposure (703) makes at least the image sensor pixels of the second ROI (465; 465'; 565) to attain second pixel values. The second ROI (465; 465'; 565) is used to provide (704) second pixels values of image sensor pixels of the second ROI (465; 465'; 565) for further processing by the image sensor (331; 631; 800).

## Description

### TECHNICAL FIELD

Embodiments herein concern methods and arrangements regarding an image sensor and 3D Imaging system based on light triangulation using the image sensor, particularly for provision of pixel values using Region of Interests, ROls.

### BACKGROUND

Industrial vision cameras and systems for factory and logistic automation may be based on three-dimensional (3D) machine vision, where 3D-images are captured, such as of an object. By 3D-images it is referred to images that comprise also "height", or "depth", information and not, or at least not only, information, such as intensity and/or color, regarding pixels in only two-dimensions (2D) as in a conventional image.

In general, each pixel of an image captured by a camera has a position in image sensor coordinates that corresponds to a position of what the camera and image sensor imaged in the real world, or more particularly, information about light from a position in the real world that was sensed by image sensing element(s) of the image sensor and which image sensing element(s) correspond to a pixel. Typically, it is reflected light from what is being imaged, for example of an object, that is being sensed. Depending on camera and system, what light is used, and how illumination by the light is provided, the sensed light may contain various information about the position that reflected the light, such as about position on an object being imaged. Thus, a pixel of the captured image has a position in image sensor coordinates that correspond to a position in the real world, such as a position on an object. The sensed light may contain also additional information about the position and object properties at that position, such as information from light intensity, color, reflectivity, scatter etc. Many 3D machine vision cameras or systems, or in general 3D imaging systems, for 3D imaging, are based on multiple 2D images being captured by an image sensor of a camera, typically sequentially during a scan of the object. Each such 2D image may contain 3D information regarding a 2D profile of the object and thus the total of such 2D images may contain 3D information about the whole object and a 3D image of the whole object may be formed from this. The 3D image may be represented by a "point cloud" where respective point corresponds to a position on the object and is associated with coordinates in 3D regarding that point. Respective point may also be associated with further information about the point, for example color or other characteristics associated with the corresponding object point.

When a pixel has a 3D position instead of "only" a position in 2D, it may be named voxel.

Line scan image data results when image data of an image is scanned or provided one line at a time, typically by scanning an object to be imaged using a light plane projected as a light line on the object and measuring reflected light from the object.
A special case of 3D imaging by scanning is 3D imaging based on light triangulation, where structured light, for example a specific pattern, typically a light plane, or "sheet of light", is used, and an object scanned through and/or by this light plane. A light line is projected on the object during the scan, corresponding to where said sheet or plane intersects with the object. Laser is often preferred but also other light sources able to provide structured light such as a light plane may be used, e.g. light sources able to provide light that stays focused and do not spread out too much, for example light sources based on Light Emitting Diodes (LEDs). Instead of a light plane corresponding to a "sheet of light", for example, a light plane corresponding to an edge of illumination, that is, a light edge, may be used.

3D machine vision systems are often based on light triangulation. In such a system there is a light source illuminating the object with structured light, such as a specific light pattern, typically a light plane as mentioned above. This kind of 3D machine vision systems or devices may be referred to as systems or devices for 3D imaging based on light, or light plane, triangulation, or simply laser triangulation when laser light is used. A light line projected on the object and is imaged by a camera, that is, the light reflected from the object is imaged. Along the light line, 3D characteristics is captured through the light triangulation, corresponding to a profile of the object with height information. By scanning the whole object like this, corresponding to a line scan, and involving movement of the line and/or object, 3D characteristics of the whole object can be captured, corresponding to multiple 2D profiles of the object and based on which a 3D image of the object can be formed as discussed above. To produce a profile image of the object during the scan, the reflected light from the object is captured by an image sensor of a camera, particularly intensity peaks thereof, are detected in the image data. The peaks occur at positions corresponding to locations on the object where the incident light, corresponding to said light line, was reflected from the object. The position in the image of a detected peak will map to a position on the object from where the light resulting in the peak was reflected in accordance with the light triangulation that the system is configured and has been setup to perform.

Peak finding algorithms typically operate in the digital domain and the aim is to find a center position of the peak's light distribution and at sub-pixel resolution. This means that an image with the intensity peaks, involving analog pixel values corresponding to light sensed by sensor elements corresponding to pixels of the image sensor, first must be read out from the image sensor and be analog-to-digital (A/D) converted. Conventionally pixel values in the same row are read out at the same time from an image sensor, i.e. parallel readout of pixels in the same row, which thereafter are A/D converted in parallel and then stored and/or processed digitally. When pixels of a row have been readout, readout of pixels of another, e.g. next, row is performed, etc. That is, there is parallel readout of pixels in the same row and such pixel rows are readout and A/D converted sequentially, i.e. serially.

It is in general desirable to remove or reduce delays to thereby facilitate or enable higher throughput from a 3D imaging system, e.g. how fast a 3D imaging system based on light triangulation can provide 3D images of objects, and/or to be able to, or better support, high, or higher, speed applications.

Intensity peaks corresponding to a profile of an object typically form a line pattern or line segments in the image as captured by the image sensor pixels. The image sensor pixels with information about the intensity peaks are only a small part of the total of image sensor pixels. If all image sensor pixels are read out there is thus a lot of pixels and readout operations performed that are not contributing to provision of useful information, that is, without information about intensity peaks that can be used to determine the position of the intensity peaks with sub-pixel resolution.

Avoiding to read out pixel values from image sensor pixels that that do not contain useful information can thus save time and enable faster readout and thereby faster operational speeds of the image sensor and imaging system using the image sensor.

Existing solutions to this are based on using region of interests, ROIs, covering the intensity peaks but excluding other image sensor pixels and then reading out only the pixels of such ROI. A simple such ROI can be formed by excluding image sensor rows that do not contain any pixel with pixel value above a certain threshold and letting the rest form the ROI.

Another more sophisticated and efficient solution is to use a so called Window Around, or At, Maximum, WAM, as ROI. The WAM is for example formed around an intensity peak in respective image sensor column so that in respective column the WAM covers the pixel with the maximum pixel value and a number of closest neighboring pixels on each side. It can thus be considered to be a "small" WAM in each column and the total of these form a total WAM that thus follows an intensity line corresponding to an object profile captured by the image. The maximum pixel value in a column can be found on the image sensor without performing a full read out from the image sensor or by performing a rough fast readout first only to determine the pixel with the maximum pixel values in respective column.

EP4266673A1 discloses a method and arrangements for provision of pixel values for readout from pixels of an image sensor based on a WAM. The WAM is formed by the image sensor so that the WAM with a certain width will be located at or around a pixel in respective image sensor column whose analog pixel value during said exposure was first in the column to reach or pass a threshold pixel value.

### SUMMARY

In view of the above, an object of the invention is to provide one or more improvements or alternatives to the prior art, such as to reduce delays involved in operation of 3D imaging systems and/or image sensors, in particular such based on, or for, 3D imaging based on laser triangulation.

According to a first aspect of embodiments herein, the object is achieved by a method, performed by an image sensor, for provision of pixels values of image sensor pixels of a second Region Of Interest, ROI, based on a first ROI. The first ROI has been used by the image sensor to provide first pixel values of image sensor pixels of the first ROI. The first pixel values resulting from a first exposure of at least the image sensor pixels of the first ROI. Respective one of said ROIs is partly covering a total of image sensor pixels and thereby partly covering an image sensing area of the image sensor comprising said total of image sensor pixels. The image sensor determines said second ROI according to a predetermined relation that the second ROI shall have to the first ROI. The image sensor exposes at least image sensor pixels of the second ROI to a second exposure, whereby at least said image sensor pixels of the second ROI attain second pixel values. The image sensor provide, using the second ROI, second pixels values of image sensor pixels of the second ROI for further processing by the image sensor.

According to a second aspect of embodiments herein, the object is achieved by an image sensor for provision of pixels values of image sensor pixels of a second ROI based on a first ROI, where the first ROI has been used by the image sensor to provide first pixel values of image sensor pixels of the first ROI. The first pixel values resulting from a first exposure of at least the image sensor pixels of the first ROI. Respective one of said ROIs is partly covering a total of image sensor pixels and thereby partly covering an image sensing area of the image sensor comprising said total of image sensor pixels. The image sensor is configured to determine said second ROI according to a predetermined relation that the second ROI shall have to the first ROI. The image sensor is further configured to expose at least image sensor pixels of the second ROI to a second exposure, whereby at least said image sensor pixels of the second ROI attain second pixel values. Moreover, the image sensor is configured to provide, using the second ROI, second pixels values of image sensor pixels of the second ROI for further processing by the image sensor.

According to a third aspect of embodiments herein, the object is achieved by a method, performed by a light triangulation based three-dimensional, 3D, imaging system. The method is regarding data readout from said imaging system. The imaging system is for 3D imaging of an object and comprises a camera with an image sensor according to the second aspect and one or more light sources for providing one or more illuminations of the object during the imaging. The 3D imaging system performs a first readout of first data from the image sensor. Said first data being based on said first pixel values of the image sensor pixels of the first ROI. The first pixel values resulting from operation of the imaging system including the image sensor such that said first exposure of the image sensor was under a first illumination of the object provided by said one or more light sources. The 3D imaging system then performs a second readout of second data from the image sensor. Said second data being based on said second pixel values of the image sensor pixels of the second ROI. The second pixel values resulting from operation of the imaging system including the image sensor such that said second exposure of the image sensor was under a second illumination of the object provided by said one or more light sources.

According to a fourth aspect of embodiments herein, the object is achieved by an imaging system for 3D imaging of an object based on light triangulation. The imaging system comprises a camera with an image sensor according to the second aspect and one or more light sources for providing one or more illuminations of the object during the imaging. The imaging system is configured to perform a first readout of first data from the image sensor. Said first data being based on said first pixel values of the image sensor pixels of the first ROI. The first pixel values resulting from operation of the imaging system including the image sensor such that said first exposure of the image sensor was under a first illumination of the object provided by said one or more light sources. The 3D imaging system is further configured to perform a second readout of second data from the image sensor. Said second data being based on said second pixel values of the image sensor pixels of the second ROI. The second pixel values resulting from operation of the imaging system including the image sensor such that said second exposure of the image sensor was under a second illumination of the object provided by said one or more light sources.

According to a fifth aspect of embodiments herein, the object is achieved by one or more computer programs comprising instructions that when executed by one or more processors causes the image sensor according to the second aspect and/or the imaging system according to the fourth aspect to perform the method according to first aspect and/or the method according to third aspect..

According to a sixth aspect of embodiments herein, the object is achieved by one or more carriers comprising the one or more computer programs according to the fifth aspect.

While solutions, such as described in the Background, using ROIs, for example WAMs, can be applied when 3D image data and related intensity peaks are present in an image, it has been found that this is not aways the case with recent developments regarding 3D imaging systems based on light triangulation, for example when 2D data is to be associated with captured 3D data. Such solution is for example disclosed in EP4220075A1. The 2D data may be read out from an image without 3D image data in it and there is thus no intensity peaks present that a ROI, such as WAM, as described in the Background, can be determined based upon. Still, it is not 2D data from all pixels of the image that is of interest to use, and hence to associate with the 3D image data. The situation is seemingly further complicated by the fact that 3D image systems based on light triangulation are typically based on scanning of a continuous moving object or camera, resulting in a sequence of image frames at a certain scanning rate, meaning that there is also position movement involved when data is captured from different image frames.

Embodiments herein and aspects thereof, as disclosed above offer a solution to this. A ROI, such as the first ROI, for example WAM, that have been used for reading out of 3D image data from a 3D image frame can be "reused" for 2D image data in a 2D image frame, which 2D image data is associated with the 3D image data, by determining the second ROI according to the predetermined relation that it shall have to the first ROI. This enable fast and efficient determination of a second ROI, particularly one relevant to use for readout of 2D image data that are or are to be associated with the 3D image data. It may happen that some adjustment or minor change of first ROI is of interest, for example to make the second ROI more relevant and/or more efficient, for example due to that movement of the object being imaged has occurred between the image frames. Such change may be accomplished by suitable predetermined relation, for example that involves certain offset and/or reduced or increased extension that the second ROI shall have relative to the first ROI. Determining and using the second ROI as in embodiments herein enables a great saving in readout time compared to reading out 2D image data of a whole 2D image frame. Also, if the second ROI has reduced extension compared to the first ROI, this enable save also in readout time compared to readout of 3D image data using the first ROI, while relevant 2D data to be associated with the 3D data still can be captured.

### BRIEF DESCRIPTION OF THE DRAWINGS

Examples of embodiments herein are described in more detail with reference to the appended schematic drawings, which are briefly described in the following.
Figure 1 schematically illustrates an example of a prior art 3D imaging system based on light triangulation.
Figure 2 schematically illustrates a simplified example of a prior art imaging system based on light triangulation.
Figure 3A schematically shows an example of an image sensor with an image sensing area.
Figure 3B is another schematic view of the image sensing area.
Figure 3C schematically shows a light distribution as example of light distribution around an intensity peak.
Figure 3D schematically shows a two different kind of ROIs in relation to the image sensing area.
Figures 4A-D are schematically illustrating and exemplify different second ROIs, named ROI2 and ROI2', in relation to first ROIs, named ROI1 and ROI1'.
Figure 5 is schematically illustrating and exemplifying a second ROI, ROI2.
Figure 6 schematically illustrates an example of a 3D imaging system based on light triangulation that embodiments herein can be performed with and/or that can be configured to perform embodiments herein.
Figure 7 is a flowchart for schematically illustrating and exemplifying a first method according to embodiments herein.
Figure 8 is a schematic block diagram for illustrating embodiments of how an image sensor may be configured to perform the first method and actions described in relation to Figure 7.
Figure 9 is a flowchart for schematically illustrating and exemplifying a second method according to embodiments herein.
Figure 10 is a schematic block diagram for illustrating embodiments of one or more devices part of an imaging system and how these may be configured to control and/or make the 3D imaging system 605 to perform the second method and/or actions described in relation to Figure 9.
Figure 11 is a schematic drawing illustrating embodiments relating to computer program(s) and carrier(s) thereof.

### DETAILED DESCRIPTION

Embodiments herein are exemplary embodiments. It should be noted that these embodiments are not necessarily mutually exclusive. Components from one embodiment may be tacitly assumed to be present in another embodiment and it will be obvious to a person skilled in the art how those components may be used in the other exemplary embodiments.

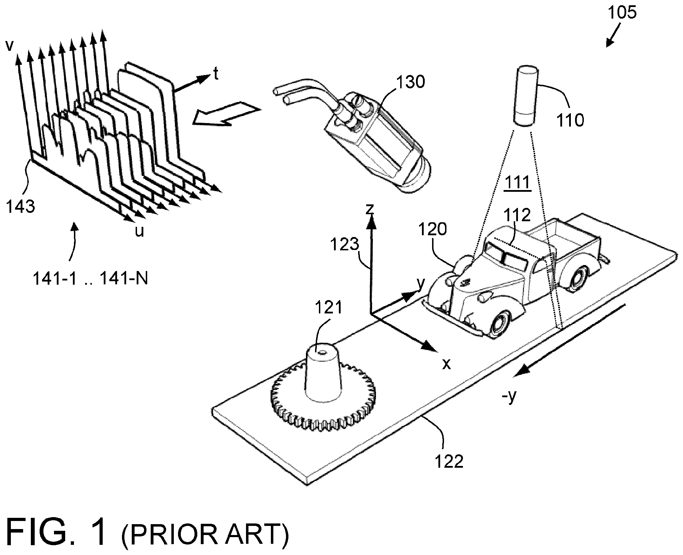

**Figure** 1 schematically illustrates an example of such type of imaging system as mentioned in the Background, namely an imaging system 105, for 3D machine vision, or simply 3D imaging, based on light triangulation, i.e. imaging for capturing information on 3D characteristics of objects using a camera 130. The system 105 is in the figure shown in a situation of normal operation, i.e. typically after calibration has been performed and the system is thus calibrated. The system 105 is configured to perform light triangulation, here in the form of sheet of light triangulation as mentioned in the Background. The system 105 further comprises a light source 110, e.g. a laser, for illuminating objects to be imaged with structured light, such as a specific light pattern, typically a light plane 111 as shown in the figure, corresponding to a sheet of light. The light is typically laser light but may alternatively for example be light from one or more Light Emitting Diodes (LEDs). An alternative to a light plane but with similar effect is a light edge, that is, an edge of an area with illumination. The generated light and illumination is typically provided through one more lenses of the camera 130, for example in order to focus the light. Moreover, the camera 130 is typically configured and located so that it, based on the so called

Scheimpflug principle or Scheimpflug focusing, will have a focus plane co-located with, in other words, aligned, with the light plane 111. This way object reflections that occur in the light plane will be in focus in the image sensor. In the shown example, the objects subject to the imaging are exemplified by a first object 120 in the form of a car and a second object 121 in the form of a gear wheel construction. When the light plane 111 is incident on an object, this corresponds to a projection of the light plane 111 on the object, which may be viewed upon as the light plane 111 intersects the object. For example, in the shown example, the light plane 111 results in a light line 112 on the object 120. The light is reflected by the object, more specifically by portions of the object at the intersection, i.e. at the light line 112 in the shown example. The camera 130 comprises an image sensor (not shown in the figure). The camera and image sensor are arranged in relation to the light plane 111 so that the light plane 111 when reflected by the objects, through the camera 130 become incident light on the image sensor. The image sensor is an arrangement, typically implemented as a chip, for sensing and converting incident light to image data, for example as intensity values resulting from light sensed by sensing elements corresponding to pixels of an image sensing area of the image sensor. For example, in the shown example, the light plane 111 will at the light line 112 on a portion of the car roof of the object 120 be reflected towards the camera 130 and image sensor, which thereby produce and provide image data with information about said portion of the car roof. With knowledge of the setup, including the geometry, of the system 105, e.g. how image sensor coordinates relate to real world coordinates, such as coordinates x,y,z of a coordinate system 123, e.g. Cartesian, relevant for the object being imaged and its context, the image data may be converted to information on 3D characteristics, e.g. a 3D shape or profile, of the object being imaged in a suitable format. The information on said 3D characteristics, e.g. said 3D shape(s) or profile(s), may comprise data describing 3D characteristics in any suitable format.

By moving e.g. the light source 110 and/or the object to be imaged, such as the first object 120 or the second object 121, so that multiple portions of the object are illuminated and cause reflected light upon the image sensor, in practice typically by scanning the objects, image data describing a more complete 3D shape of the object may be produced, e.g. corresponding to multiple, consecutive, profiles of the object, such as the shown profile images 141-1 - 141-N of the first object 120, where each profile image shows a contour of the first object 120 where the light plane 111 was reflected when the image sensor of the camera 130 sensed the light resulting in the profile image. As indicated in the figure, a conveyor belt 122 or similar may be used to move the objects through the light plane 111, with the light source 110 and the camera 130 typically stationary. Alternatively the light plane and/or the camera 130 may be moved over the object, so that all portions of the object, or at least all portions facing the light source 110, are illuminated and the camera can receive light reflected from different parts of the object desirable to image.

As understood from the above, an image frame provided by the camera 130 and its image sensor, e.g. of the first object 120, may result in any one of the profile images 141-1 - 141-N. As mentioned in the Background, each position of the contour of the first object shown in any of the profile images 141-1 - 141-N are typically determined based on identification of intensity peaks in image data captured by the image sensor and on finding the positions of these intensity peaks, e.g. by means of one or more intensity peak finding algorithms. The system 105 and conventional peak finding algorithms are typically configured to, in each image frame, search for an intensity peak per pixel column. If sensor coordinates are u, v, as indicted in the figure, may be along image sensor rows and be used to indicate a position in such row, e.g. corresponding to an image sensor column. Correspondingly, v may be along image sensor columns and be used to indicate a position in such column, e.g. corresponding to an image sensor row.

For each position u of an image frame it may be searched for a peak position along v, e.g. by means of a peak finding algorithm as mentioned above, and the identified peaks in an image frame may result in one the profile images 141-1 - 141-N as shown in the figure. The profile images are formed by image points in a sensor based coordinate system 143, u, v, t that as mentioned above relate to real world coordinates, such as in the coordinates x,y,z of the coordinate system 123. The total of image frames and profile images can be used to create a 3D image of the first object 120 for example in the form of such "point cloud" mentioned in the Background where respective point corresponds to a position on the object and is associated with coordinates in 3D regarding that point.

As a development towards embodiments herein, the situation indicated in the Background will first be further elaborated upon.

Light triangulation based imaging systems has, just as any technology, continued to develop and have for example been extended with capture of 2D data in association with captured 3D data, where the latter involves such intensity peak finding as discussed above and in the Background. Such solution is for example disclosed in EP4220075A1.

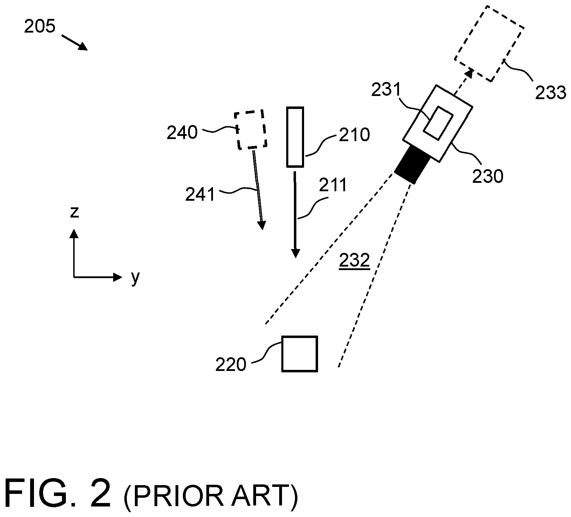

**Figure** 2 schematically illustrates a simplified example of a prior art imaging system that may be configured to perform as in EP4220075A1, that is, for obtaining and associating 2D image data with 3D image data based on light triangulation. One difference compared to conventional "only" 3D imaging systems based on light triangulation, is that there is typically also one or more further light sources for providing separate illumination for the 2D imaging and thus light to be captured in the 2D image data associated with the 3D image data. In the figure such further light source is exemplified by a further, second, light source 240 for provision of second light 241 in addition to a first light source 210 that provide first light 211 for the 3D imaging based on light triangulation. A solution as in EP4220075A1 may be implemented through software controlling a conventional 3D imaging system based on light triangulation, such as the system 105, with added second light source 211. Thus, except for the second light source 240, the imaging system 205 may structurally correspond to the imaging system 105, but that is here shown in more simplified manner, with one or more further light sources, such as the second light source 240, used in generation of 2D image data to be associated with the 3D image data.

Hence, in addition to the second light source 240, the imaging system 205 comprises features in correspondence to what was discussed above in relation to Figure 1, such as a camera 230 with an image sensor 231. The figure also shows an object 220 to be imaged in a field of view (232) of the camera 230, where it is illuminated by the first light 211, for example in the form of a light plane 211, and the second light 241. As in EP4220075A1, both the first and second light may illuminate the object 220 at the same time or only one of the said lights simultaneously, for example the first light 211 when a 3D image frame is captured by the camera 221 and the second light 241 when an image frame with only 2D image data is captured by the camera 231. The figure also shows an example of a computing device 233, such as computer or similar, that in such system may be connected to the camera 231, for example to receive and process image data from it, and/or to control the camera and/or the system, such as the light sources 210, 240.

While solutions, such as described in the Background, using ROIs, for example WAMs, can be applied when 3D image data and related intensity peaks are present in an image, it has been found that this is not the case for all embodiments as disclosed in EP4220075A1. In some embodiments therein, the 2D data is read out from an image without 3D image data in it, for example since a first light, typically laser, for the 3D image is temporarily switched off and there is only light for the 2D imaging present. For such image there is thus no intensity peaks present that a ROI, such as WAM, as described in the Background, can be determined based upon. Still, it is not 2D data from all pixels of the image that is of interest to use, and hence to associate with the 3D image data. It would thus be desirable to be able to read out only this 2D image data and not 2D image data from all pixels.

The situation, at least seemingly, may be further complicated by the fact that there typically is some movement of the object between image frames.

The 2D data of interest is typically 2D data associated with intensity peaks from image fames with 3D image data captured closest in time before and/or after the image frame with the 2D image data.

To visualize the situation with separate 2D data in 2D image frames between 3D image frames, the profile images 141-1 - 141-N shown in Figure 1 can be considered since they correspond to 3D image frames, respectively. The separate 2D image frames with 2D image data would then be located between 3D image frames and thus correspondingly in between the profile images 141-1 - 141-N shown in Figure 1, however, in the separate 2D image frame there is no "line" formed by intensity peaks corresponding to an object profile.

Embodiments herein are at least partly based on realization that a change in image sensor position between a 3D image frame and the 2D image frame with 2D image data associated with the 3D image data in practice typically will be so small that it can be neglected, that is, is not need to compensated for that different image frames are involved. Alternatively, the image sensor position change due movement involved between an image frame with 3D image and the image frame with its associated 2D image data can be computed and/or estimated from information available for the 3D imaging system being used. This can be done when it is known how the system is or will be set up to be operational for scanning and capturing of said image frames. The image sensor position change can then be determined, such as computed and/or estimated, from geometrical relations between the camera, its field of view and the location of light, typically light plane, used for the 3D imaging, the frame rate that the camera operates with and movement speed of the object(s).

The image sensor positions of 2D image data associated with 3D image data will thus be in the vicinity of intensity peak position of the 3D image data and/or within some offset from these.

As a result, the ROI, for example WAM, used for read out of the 3D image data from a 3D image frame can, at least to some extent, be "reused" for readout of 2D image data associated with the 3D image data although the 2D image data belong to another, 2D, image frame. If a change of ROI is of interest, for example due to that movement has occurred between the image frames or for other reason, this may be compensated for by a small change, such as an offset of the ROI, for example along pixel columns, and/or extension or reduction in coverage of the ROI, typically in height, that is, along columns. Reduction in ROI coverage may be of interest when for example only a single pixel value per column is used as 2D image data for a 3D position in the same column. The ROI may then be reduced to a single pixel height and thereby be provision of pixel values from only a single pixel per column for the readout of 2D image data. This enables a great saving in readout time compared to reading out 2D image data of a whole image frame, thus from all rows, and also a great save in comparison to readout of 3D image data when the full and not reduced ROI is used.

To sum up, "reusing" the ROI of a 3D image frame for one or more 2D image frames has several advantages: As explained above, the ROI for the 3D image frame is relevant despite it is for another image frame, especially when the 2D image frame(s) are captured close in time, for example between 3D image frames. In case of several 2D image frames these are typically consecutively captured directly after the 3D image frame with the 3D image data that the 2D data of the 2D image frames shall be associated with. The 3D image frame ROI is already available and has been used by the image sensor. Changes of the ROI that may be of interest are regarding offset and/or extension and/or reduction, which are simple changes that can easily be performed directly on and by the image sensor based on the available ROI for 3D image data. The 2D image data associated with the 3D image data can be read out without having to read out all 2D image data from a 2D image frame. As a result, the 2D image data can be provided as fast as, or even faster than the 3D image data.

Embodiments herein relate to provision of second pixels values, for example comprising said 2D image data, of image sensor pixels of a second ROI, such as a second WAM, based on a first ROI, for example a first WAM. The first ROI is a ROI that has been used by the image sensor to provide first pixel values of image sensor pixels of the first ROI, for example first pixel values comprising said 3D image data that the 2D image data is associated with. The first pixel values result from a first exposure of at least the image sensor pixels of the first ROI, but typically of the whole image sensor, and for example correspond to pixel values of a 3D image frame as mentioned above.

The second ROI is determined according to a predetermined relation that the second ROI shall have to the first ROI. When the second ROI is determined based on the first ROI it has thus already been determined, that is, is predetermined, which relation the second ROI shall have, for example have a certain offset and/or extension or reduction in coverage, in relation to the first ROI. Before or after the second ROI is determined, the image sensor pixels of the image sensor, or at least of the second ROI, are exposed to a second exposure, whereby at least said image sensor pixels of the second ROI attain second pixel values, for example comprising said 2D image data. The second pixels values of image sensor pixels of the second ROI may then be provided by using the second ROI. The second pixel values are provided for further processing by the image sensor, for example provide the second pixel values for readout from the image sensor. The further processing may alternativity for example involve that the image sensor processes the pixel values and may then output information resulting from the processing for readout from the image sensor.

To enable better understanding of WAM as ROI, of the situations discussed above and of embodiments herein, a more detailed example of WAM as ROI will now be exemplified and discussed in an image and image sensor context.

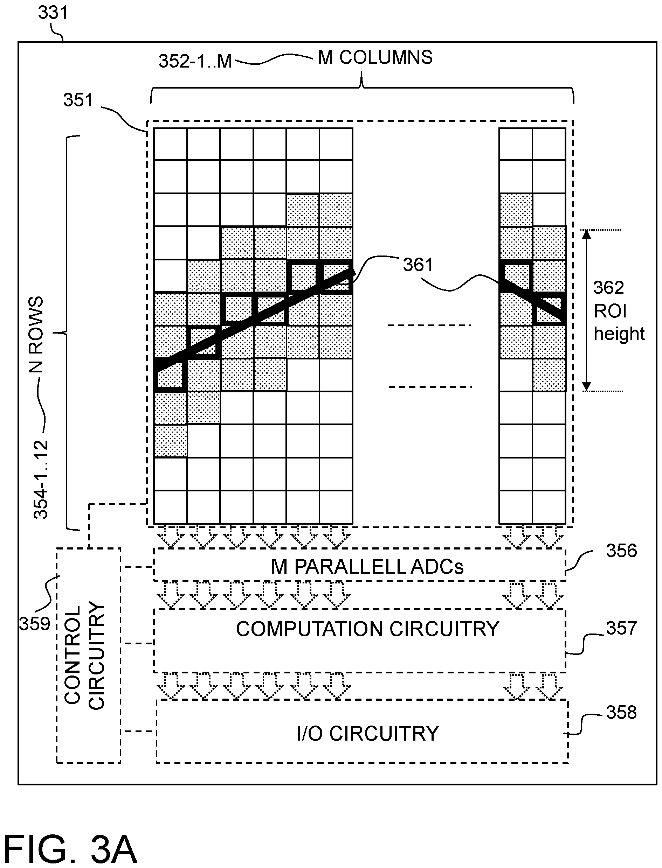

**Figure 3A** schematically shows an example of an image sensor 331 with an image sensing area 351 that is formed by a total of pixels shown as squares. The pixels of the image sensor 331 correspond to light sensing elements and may be of conventional type. The total of pixels are in the example arranged in N rows, in shown example N=12, and M columns. There is thus 352-1..352-M columns and 354-1..352-12 rows. The shown view is broken along the rows.

In the image sensing area 351, an intensity peak line 361 has been drawn and pixels with shading indicate a ROIn being a WAM formed by 5 pixels per column, thus with a ROI height 362 that is 5 pixels, and centered around said intensity peak line 361. Of course, no such line or WAM can be seen by visual inspection of a corresponding real image sensing area 351. The intensity peak line 361 and WAM is drawn just to facilitate understanding of how intensity peaks and WAM relate to each other and to the image sensor. The intensity peak line 361 correspond to where intensity peaks may be located with sub-pixel resolution and may result from exposure of the image sensor 331 when it is part of a camera in a 3D imaging system based on light triangulation, such as any one of the imaging systems 105, 205. If an image based on the total of pixels would be read out from the image sensor 331 after it had been exposed to a light intensity line having intensity peaks according to the intensity peak line 361, the light intensity line would be visible in the image and the intensity peak line 361 could be detected from that. Such intensity line and the intensity peak line 361 may thus result from reflected light from an object when the object has been illuminated by a light line during light triangulation, such as described above in relation to Figure 1.

In practice, each pixel can typically hold only a single pixel value corresponding to an intensity value. The WAM in each column 352 is centered on pixels detected to hold a maximum pixel value in each column, these pixels are marked with bold lines in the figure. The total of WAM per column for all columns M form a total WAM that is centered around the intensity light line 361.

In the example there are a number N=12 pixel rows 0..11, corresponding to image sensor rows 354-1.. 354-12, and a number M of pixel columns 1..M, corresponding to image sensor columns 352-1..352-M.

Typically pixel values are read out in parallel per pixel row from the image sensor 331. that is, the pixel values of pixels in the same row are read out in parallel and are then analog-to digital (A/D) converted. As indicated in the figure, the M columns 352 may be connected to M parallel A/D converters (ADCs) 356. An alternative may be to instead read out pixels with the same WAM position in parallel, meaning that all shaded pixels in Figure 3A, i.e. corresponding to the WAM, can be read out by 5 consecutive parallel readouts. A detailed example of such implementation is for example disclosed in EP4266673A1 mentioned in the Background.

After the A/D conversion, thus in a digital domain, there may be some processing and/or computing circuitry, such as the computation circuitry 357 schematically shown in the figure, that for example operate on the resulting digital image data, such as pixel on values per column and/or from multiple columns. There may further be memory elements involved for temporarily storing pixel values and intermediate data during such processing and/or computations. Such memory elements may enable processing and computations to be performed by the image sensor on pixel values from all pixels of the WAM.

The image sensor 331 also comprises some input/output (I/O) circuitry 358 for example involved in input for controlling of the image sensor and to enable reading out of image data from the image sensor 331 after the A/D conversion and/or to enable to read out information resulting from said processing, for example computations, performed by the computation circuitry 357. When an image sensor provides something for readout from the image sensor, this is via I/O circuitry, such as the I/O circuitry 358.

The figure also shows control circuitry 359 involved in the control of the image sensor 331 and parts thereof, for example for the addressing and/or selection of columns and/or row and/or pixels to be A/D converted etc. The control circuitry 359, may also be involved in temporarily storing information regarding a ROI such as WAM(s) in use, which pixels that are involved in the WAM(s) etc.

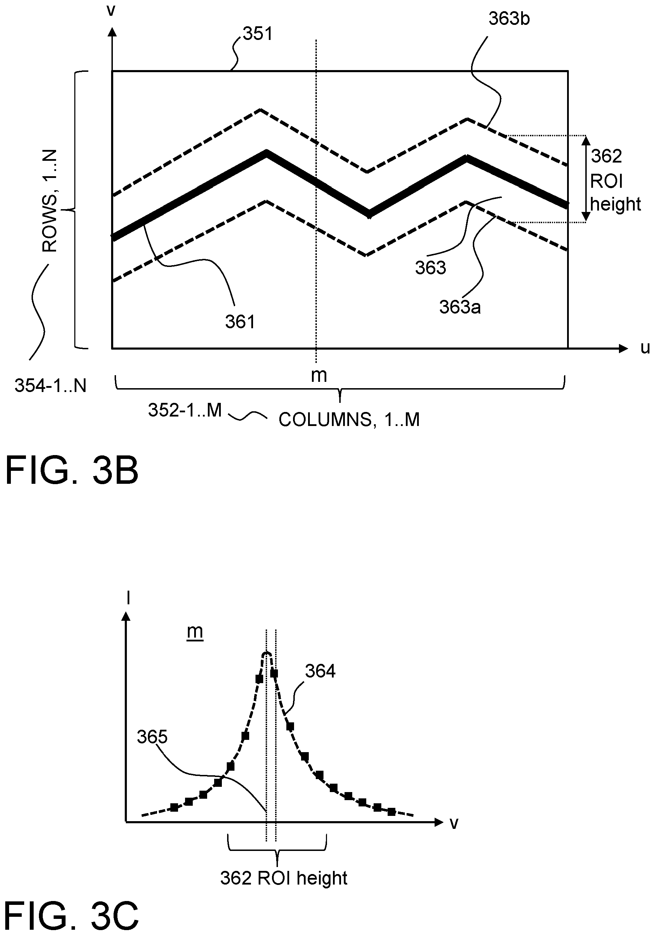

**Figure 3B** is another schematic view of the image sensing area 351. Image sensor coordinates u, v are shown instead of individual pixels as in Figure 3A. In the figure, u corresponds to column coordinates and v corresponds to row coordinates. The ROI, in the form of a WAM that in Figure 3A is indicted by the shaded pixels, is here indicated as a WAM 363, corresponding to an area between lower and upper WAM end lines 363a,b. The intensity peak line 361 is shown as reference as well. Instead of 12 rows as in Figure 3A, the image sensing area 351 is here drawn more generally with N rows. The ROI height 362 is indicated also in this figure but in a general fashion without specifying that it is 5 pixels as in Figure 3A. Figure 3B still shows that the ROI height 362 is the same for all columns and for all column coordinates u, but that the ROI position, here WAM position, differs along u since the ROI when being a WAM follows and covers the intensity peak line 361.

**Figure 3C** schematically shows a light distribution 364 as example of light distribution around an intensity peak. The distribution is shown along axis v, i.e. along a column, for example a column m as marked out in Figure 3B.

The intensity values of pixels along the column m are shown as small black squares in the figure. As can be seen the intensity values indicate an intensity I and belong to different rows, that is, are at different row coordinates v and thus vary along the column. The intensity values occur according to a the light distribution 364, typically a normal distribution with a Gaussian, "bell", shape.

In practice, the ROI height, 362 when the ROI is a WAM is selected so that, for the imaging system being used, the result will be a sufficient coverage of the light distribution 364 so that a peak finding algorithm can exploit the light distribution 261 to find an actual center position of the light distribution 263 with sub-pixel resolution, that is, find the peak position along v with subpixel resolution. A peak finding algorithm is typically used outside the image sensor after 2D image data has been read out from the image sensor. As indicated in the figure, as well as it was indicated in Figure 3A, the actual peak position is with some offset from the center position of the pixel with the maximum intensity value and that the WAM is centered around. In the shown example, the ROI height 362 is 5 pixels, which is just an example and typically a bit low. In practice, when a ROI being a WAM is used, a height should typically be used that covers about 75% or more of the energy in the intensity peak. For a typical sensor and setup this may mean a ROI height in a range 7-25 pixels. However, there may be situations when also less than 7 and more than 25 may be used.

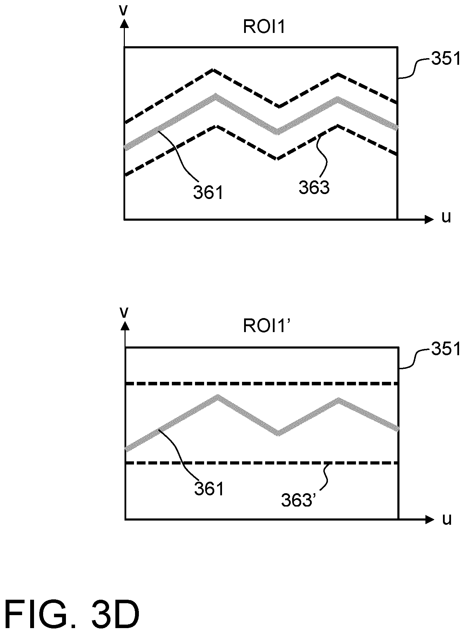

**Figure 3D** schematically shows two different kind of ROIs in relation to the image sensing area 351. The ROI 363, here also denoted ROI1, has already been discussed above and is a WAM. There is also shown a ROI 363', also denoted ROI1', that is a more "ordinary" type of rectangular ROI. Respective one of the ROIs, ROI1 and ROI1', is partly covering a total of image sensor pixels, or in other words, partly covering the image sensing area 351. Both are covering the intensity peak line 361, shown as reference, with some margin, for example so that there will be a sufficient coverage of light distribution around the peaks, as discussed above. Both ROI1 and ROI1' are examples of first ROIs that can be used with embodiments herein and will be used as examples in the following. ROI1, being a WAM, can be considered more efficient that ROI1' in covering what is relevant since it traces the intensity peak line 361.

Referring back now to embodiments herein, where a second ROI is determined according to a predetermined relation that the second ROI shall have to the first ROI.

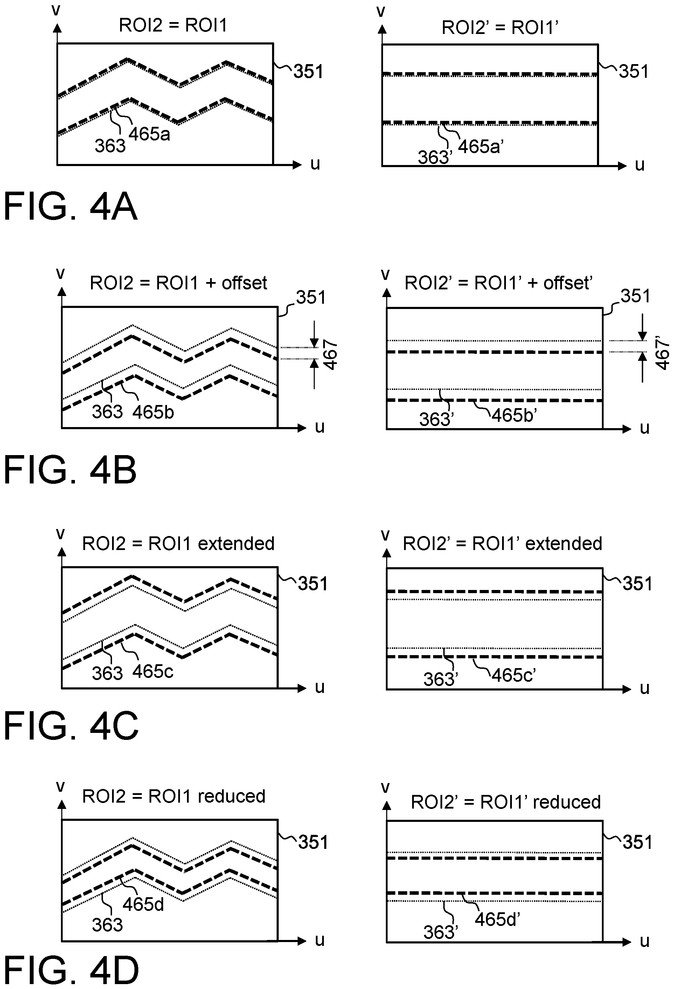

**Figures 4A-D** are schematically illustrating and exemplifying different second ROIs, named ROI2 and ROI2', in relation to first ROIs, named ROI1 and ROI1' and that have been determined according to different exemplifying predetermined relations. ROI1 and ROI1' are drawn for reference in the shown examples and correspond to ROI1 and ROI1' discussed above in relation to Figure 3D, that is, ROI1 is the first ROI 363 and ROI1' the first ROI 363'. Note that these are just two different examples of a first ROI and that embodiments herein of course may be used with also other types of first ROIs and/or first ROIs shaped and/or positioned differently than in the examples herein.

ROI1 and ROI1' may further have been determined as discussed above, that is, determined to cover a light distribution around intensity peaks resulting from 3D imaging based on light triangulation. More generally, the first ROI, such as the ROI1 or ROI1', may have been used by the image sensor, such as the image sensor 331, to provide first pixel values of image sensor pixels of the first ROI resulting from a first exposure of image sensor pixels.

In the shown examples, the second ROIs, ROI2 and ROI2', are drawn with thick dashed lines and the first ROIs, ROI and ROI1' are drawn with finer dotted lines. As should be understood, the respective ROI is located between the shown lines. The type of predetermined relation that the second ROI has to the first ROI is indicated above each example.

Figure 4A shows examples of when the predetermined relation is that ROI2 is a copy of the ROI1 and thereby covering the same image sensor pixels as ROI1. Hence: Figure 4A shows to the left a second ROI, ROI2, 463a that is a copy of the first ROI, ROI1, 363, and to the right a second ROI, ROI2', 463a' that is a copy of the first ROI, ROI1', 363'.

Figure 4B shows examples of when the predetermined relation is that ROI2 is shaped as ROI1 but positioned with a certain offset relative to ROI1 and thereby covering at least some image sensor pixels that are different than those covered by ROI1. In the example, said certain offset is in a direction along image sensor column, and in a downward direction, but may attentively be in another direction. Hence: Figure 4B shows to the left a second ROI, ROI2, 463b that is the first ROI, ROI1, 363, with a certain offset and to the right a second ROI, ROI2', 463b' that is the first ROI, ROI1', 363', with a certain offset.

Figure 4C shows examples of when the predetermined relation is that ROI2 is shaped as ROI1 but with certain increased extension along a certain direction, such that ROI2 covers more pixels along said certain direction than ROI1. Hence: Figure 4C shows to the left a second ROI, ROI2, 463c that is the first ROI, ROI1, 363, with a certain increased extension and to the right a second ROI, ROI2', 463c' that is the first ROI, ROI1', 363', with a certain increased extension.

The certain increased extension of the ROI may involve that one or more pixels are being covered in the direction of the increase, for example so that one or more further pixels along columns become covered by the second ROI.

Figure 4D shows examples of when the predetermined relation is that ROI2 is shaped as ROI1 but with certain decreased extension along a certain direction, such that ROI2 covers less pixels along said certain direction than ROI1. Hence: Figure 4D shows to the left a second ROI, ROI2, 463d that is the first ROI, ROI1, 363, with a certain decreased extension and to the right a second ROI, ROI2', 463d' that is the first ROI, ROI1', 363', with a certain decreased extension.

The certain decreased extension of the ROI may involve that one or more pixels less are being covered in the direction of the decrease, for example so that one or more less pixels along columns become covered by the second ROI.

In the examples of Figures 4C-D, said certain increased extension and said certain decreased extension are shown in both directions along image sensor columns, but may alternatively be in only one and/or different direction(s), such as extension only "upwards" or "downwards" along columns..

Moreover, increased or decreased extension as in the examples of Figures 4C-D can of course be combined with an offset as in the examples of Figure 4B. An example of this follows next.

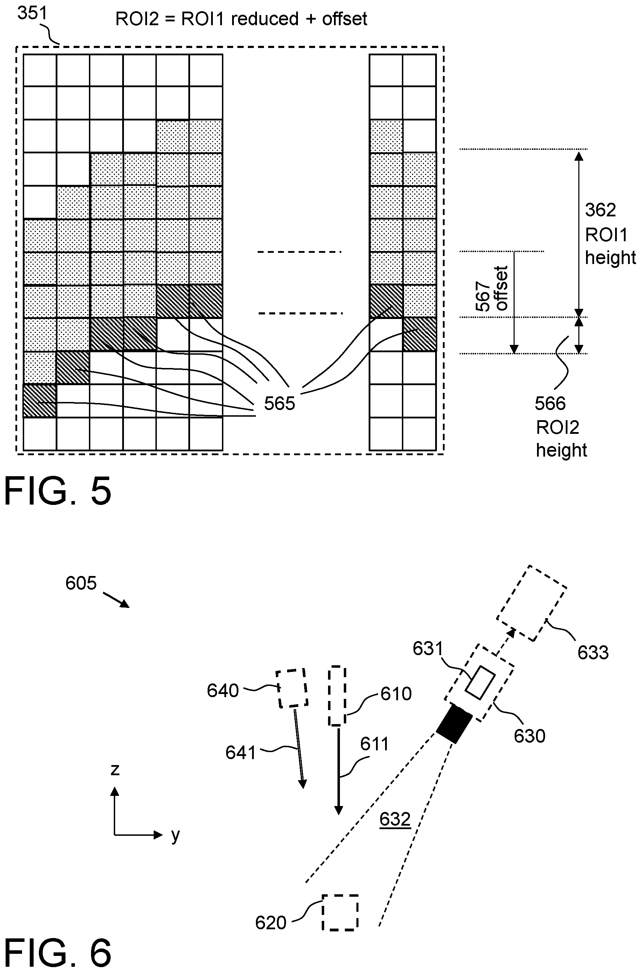

**Figure 5** is schematically illustrating and exemplifying a second ROI 565, or ROI2, that is an example of a second ROI, or ROI2, that has a predetermined relation that is both a reduced extension and offset to a first ROI, also named ROI1. As should be appreciated, Figure 5 is a bit more detailed example of a second ROI in relation to a first ROI than the more simplified examples of Figures 4A-D. As can be seen the first ROI 363, ROI1, is the same ROI that was exemplified and discussed above in relation to Figure 3A. In Figure 5, the same pixels are shaded as in Figure 3A to indicate ROI1. Further, below ROI1 are the pixels of ROI2, as second ROI 565, indicated by a darker shading and marked with reference numeral 565.

The figure shows that ROI2 565 has the same shape as ROI1 but is narrower and thus has reduced extension along the columns. Instead of ROI1 height 362 of 5 pixels height, it has a ROI2 height of 1 pixel. As seen in the figure, ROI2 565 is also with an offset of 3 pixels "downwards" in the figure.

In practice, with a ROI1 being a WAM as shown and that may be available after it has been used for capturing 3D image data of a 3D image frame, ROI2 565 can be provided by simply taking the center pixel line of ROI1 as a WAM and offset it by 3 pixels, which thus corresponds to the predetermined relation that ROI2 shall have to ROI1 in this case. The image sensor 331 can be configured to perform this for a 2D image frame that follows a 3D image frame that the ROI1 has been provided for and been used with. It is thus about changing an existing ROI, the ROI1, according to the predetermined relation into ROI2 565 before applying ROI2 for the next exposure or exposures.

**Figure 6** schematically illustrates an example of a 3D imaging system 605 based on light triangulation that embodiments herein can be performed with, and/or that can be configured to perform embodiments herein. The figure also shows a context in which an image sensor 631 configured to perform according to embodiments herein may be used. The imaging system 605 may correspond to the imaging system 205 but further configured to perform embodiments herein. For example, in the figure the image sensor 631 is part of a camera 630 comprised in the imaging system 605 and that may be used for 2D and 3D imaging just as the imaging system 205 and in that context perform embodiments herein. The image sensor 631 may correspond to the image sensor 331 configured to perform embodiments herein and may be an image sensor implemented as discussed in said EP4266673A1 to facilitate using WAMs as ROls.

Hence, the figure shows:
An object 620 that may correspond to the object 120 or 220, and is shown located at least partly within field of view 632 of the camera 630.

A first light source 610 of the imaging system 605 configured to illuminate the object 620 with first light 611 for 3D imaging based on light triangulation, typically in the form of structured light, such as a specific light pattern, for example a sheet of light resulting in a light line, such as a laser line, on and reflected by the object 620 and then captured by the camera 630 with the image sensor 631. Another example of structured light that can be used as the first light is a light edge, i.e. an edge of an area or portion with illumination. Light from LEDs is for example possible instead of from laser. The illumination is in the example in a vertical direction, i.e. substantially parallel to the z-axis. However, other direction or directions of illumination are of course possible to use with embodiments herein.

A further, second, light source 640 of the imaging system 605 for provision of second light 641 that may be used in generation of 2D image data to be associated with 3D image data from the 3D imaging, such as disclosed in EP4220075A1.

A computing device 633, such as computer or similar, may be part of the imaging system. It may be connected to the camera 630 and/or the light sources 610, 640 to receive and process image related data and information from the camera 631, and/or to control the imaging system 605 and/or the camera 631 and/or the imaging sensor 631 thereof, and/or the light sources 610, 640. The computing device 633 may be configured to perform and/or be involved in some of the actions relating to some embodiments herein, as described further below. Alternatively or additionally the computing device 633, or corresponding functionality may fully or partly be integrated in the same unit as the camera 630 and it may then be considered that the camera 630 has this functionality.

The object 620 may be illuminated by the first light 611 and images be captured by the camera 630 with the image sensor 631 as in conventional 3D imaging by light triangulation. Additionally, the object 620 may be imaged under illumination of the second light 641, and images be captured by the camera 630 with the image sensor 631 to produce 2D image data to be associated with 3D image data such as disclosed in EP4220075A1.

Correspondingly as in conventional light triangulation based imaging systems, the imaging system 605 may be configured to move the first light source 610, for example together with the second light source 640, and/or the object 620 in relation to the illumination by the light sources 610, 640, so that at different consecutive time instants, different consecutive portions of the object 620 are illuminated by the first light 611 and the second light 641. The object may be moved as part of transportation of the object, for example by a conveyor belt or similar. After reflection from the object 620, the light is sensed by the image sensor 631. A respective image frame is associated with a respective time instant of when the image frame was sensed, i.e. captured, and with a respective portion of the object 620 from which the image sensor 631 sensed reflected light 611 at the respective time instant.

Image frames and/or information derived from image frames, e.g. intensity peak positions and associated 2D image data, provided by the camera 630 and/or the image sensor 631 may be transferred for further processing outside the camera 630, e.g. to the computing device 633.

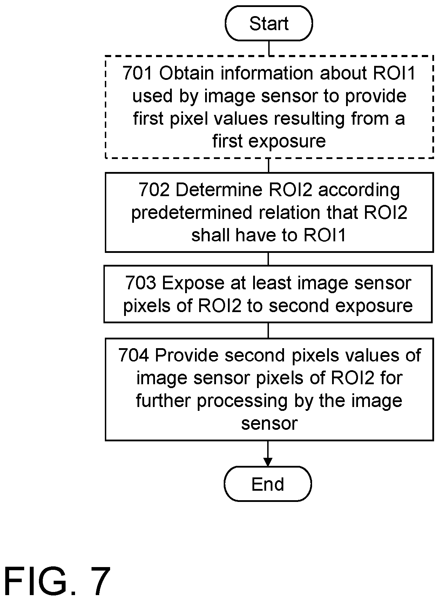

**Figure** 7 is a flowchart for schematically illustrating and exemplifying a first method according to embodiments herein, already indicated above, but that here are disclosed in some further detail. The actions below, which may form the method, are for provision of pixels values of image sensor pixels of a second ROI based on a first ROI. The method and/or actions below may be performed by an image sensor, such as the image sensor 331 or 631, or by an imaging system, such as the imaging system 605, and/or by other suitable device(s). In the following, it will be assumed that an image sensor, exemplified by the image sensor 331, performs the method. The first ROI, that also may be referred to as ROI1, may for example be ROI1 365 or 365'. In the following, the ROI1 365 may be used as a non-limiting example of the first ROI. The second ROI, that also may be referred to as ROI2, may for example be any one of ROI2s 465a-d, 465a-d', 565. To simplify, in the following the second ROI may be referred to as ROI2 465 that thus may be used as non-limiting example of the second ROI and refer to any one of ROI2s 465a-d.

As understood from what was discussed above, the image sensor of embodiments herein should be suitable for use as an image sensor in a camera of an imaging system for 3D imaging of an object based on light triangulation. Further, as should be realized, the image sensor pixels correspond to light sensing elements that sense light during exposure. A respective pixel value attained by a respective image sensor pixel during the exposure typically correspond to the an accumulated amount of light that the respective image sensor pixel received during the exposure. The amount and the pixel value typically corresponds to a measure of the light intensity of incident light on the image sensor pixel, or more specifically on a light sensitive portion thereof, during the exposure.

The first ROI is thus a ROI that has been used by an image sensor, preferably the image sensor performing the method, such as the image sensor 331, to provide first pixel values of image sensor pixels of ROI1 365 resulting from a first exposure of at least the image sensor pixels of the ROI1 365, but typically exposure of all, that is, the total of, image sensor pixels.

Respective one of said ROIs, that is of the first and second ROIs, is partly covering a total of image sensor pixels and thereby partly covering an image sensing area, such as the imaging sensing area 361, of the image sensor 331 comprising said total of image sensor pixels. Hence, respective ROI only covers a subset of all pixels of the image sensor and may correspond to an area or continuous group of pixels of the image sensing area 361.

Note that the actions below may be taken in any suitable order and/or be carried out fully or partly overlapping in time when this is possible and suitable.

### Action 701

The image sensor 331 may obtain information identifying the first ROI, here exemplified by ROI1 365. Typically this information is obtained internally by the image sensor 331 and may follow automatically from said use of the first ROI since this in practice means that the image sensor 331 from the use has available information about the first ROI and thereby information identifying it, or in other words that the first ROI is already known by the image sensor 331. If another device is performing the method, information identifying the first ROI may be obtained by receiving this information, for example from the image sensor 331 that have used the first ROI. As already indicated above, ROI1 365 may be a ROI, such as a WAM, as conventionally used for readout of 3D image data from an image frame and by that may be able to avoid reading out image data from pixels with no useful information.

### Action 702

The image sensor 331 determines the ROI2 465 according to a predetermined relation that the ROI2 465 shall have to the ROI1 365.

Said predetermined relation as such may have been set and/or selected by a user and/or set by a certain setting of the image sensor and/or operational mode that the image sensor has been set or been controlled to operate according to.

Examples of said relation between ROI1 and ROI2, and how ROI2 may relate to ROI1 were discussed above in relation to Figures 4-5. For example:
The predetermined relation may be that ROI2 465b is shaped as the ROI1 365 but positioned on the image sensing area 351 with a certain offset, such as the offset 467, relative to the first RO1 365 and thereby covering at least some image sensor pixels that are different than those covered by the ROI1 365.

Said certain offset may be in any direction on the image sensing area 351, but typically corresponds to a column direction offset. The certain offset may be predetermined and/or for example correspond to or be based on a distance that an object being imaged, for example the object 620, will move or have moved between said first exposure and said second exposure when the image sensor 331 is used by an imaging system, for example the system 605, based on light scanning of the object.

As used herein, "shaped as first ROI" include same shape and same size but also same shape but different size, such as with reduced or increased extension, for example height, compared to the first ROI. For example covering same, less or more pixels in the respective column as the first ROI.

Further, the predetermined relation may be that the ROI2 465, such as ROI2 465c or 465d, is shaped as the ROI1 365 but with certain reduced or increased extension along a certain direction on the image sensing area 351, such that the ROI2 465 covers more or less pixels along said certain direction than the ROI1 365.

Generally, said certain direction may in principle be any direction on the image sensing area 351. Reduced or increased extension of ROI1 along said certain direction means that the number of pixels of ROI1 along this direction are reduced or increased, typically corresponding to a reduction or increase of height or width of ROI1. Typically the reduction or increase is of the height of ROI1, or in other words so that ROI2 covers more or less pixels in respective pixel column than ROI1.

In a special case, the predetermined relation is that ROI2 465, such as the ROI2 465a, is a copy of 'ROI1 365 and thereby covering the same image sensor pixels as ROI1 365.

### Action 703

The image sensor 331 exposes at least image sensor pixels of the ROI2 465 to a second exposure, whereby at least said image sensor pixels of the ROI2 465 attain second pixel values.

Note that the first and second exposure need not to be exposures of the same pixels, although, in practice typically the first exposure is of all image sensor pixels and the second exposure is another, typically subsequent, exposure of all the image sensor pixels. Typically there has been a readout of pixel values from image senor pixels of the ROI1 365 between the exposures.

### Action 704

The image sensor 331 provides, using the ROI2 465, the second pixels values of image sensor pixels of the ROI2 465 for further processing by the image sensor 331.

Said further processing may involve that the image sensor 331 provides the second pixel values for readout from the image sensor and/or that the image sensor perform computations involving the second pixel values and provide a result for readout from the image sensor.

A already indicated above, the first ROI, that is, ROI1, such as ROI1 365, may be covering intensity peaks on the image sensing area 331, corresponding to intensity peaks of a 3D image frames, when the image sensor 331 is use in a 3D imaging system based on light triangulation, such as the imaging system 605. Hence:
- ROI1, such as the ROI1 365, may partly cover at least some image sensor pixel columns of the image sensing area 361 and same number of pixels in respective such column. Said same number of pixels may correspond to a ROI1, or WAM, extension, or height. It may be predetermined or determined by the image sensor and/or a user, for example by a selection from predetermined different numbers of pixels based on some input to and/or setting for image sensor 331.
- ROI1, such as the ROI 365, may be determined by the image sensor 331 to cover image sensor pixels based on their first pixel values.
- ROI1, such as the ROI 365, may be determined by the image sensor 331 to, along a respective pixel line, for example column, of the image sensing area 351, cover a respective intensity peak resulting from said first exposure. Said respective intensity peak may result from said first exposure, in this case of the total of image sensor pixels, such as of the whole image sensing area 351 of the image sensor 331. The first exposure resulting in that the image sensor pixels of the image sensing area 351 attained said first pixel values, for example during a first illumination condition of the image sensing area 331. The respective intensity peak may thus be found from looking at the first pixel values resulting from the first exposure. The image sensor 331 may have found pixels with a local maximal first pixel value, such as by searching image sensor pixels along pixel lines in said certain direction, for example along respective pixel column. Then the image sensor 331 may form the first ROI by covering respective pixel with such local maximal first pixel value and closest neighboring pixels around respective such pixel, typically on both sides along said certain direction, for example one or more closest neighboring pixels on respective side of the pixel with the local maximal first pixel value.
- ROI1, such as the ROI 365, may thus be determined by the image sensor 331 to cover the same number of pixels in the respective pixel line around said respective intensity peak in the respective pixel line. This should result in ROI1 covering same number of pixels along respective pixel line in said certain direction, for example same number of pixels in respective pixel column and covering a respective intensity peak in the column. In case of intensity peaks belonging to a sensed reflected light line from 3D imaging based on light triangulation, ROI1 is understood to in this case cover the reflected light line as it has been captured by the image sensor 331 during the first exposure. In these embodiments, the first ROI may thus be or correspond to a total Window Around Maximum, WAM, that may be formed of a number of local WAMs, one local WAM in a respective pixel line, typically pixel column. The local WAM of respective pixel line may thus cover a pixel in this pixel line with a local maximal first pixel value and its closest neighboring pixels in the pixel line, with the same number of pixels covered by the first ROI in the respective pixel line.

Note that after action 704, the second ROI, ROI2, that is, same ROI2, may be used for one of more further exposures, corresponding to further executions of Actions 703-704 for a third exposure etc.

Also, note that in a second execution of the method, the first ROI, ROI1, may be the second ROI, ROI2, from the previous execution of the method.

The predetermined relation may be the same in case of several, such as several consecutive, executions of the method. For embodiments with a predetermined relation that results in a changed ROI, same predetermined relation means that the second ROI in the second execution of the method will be different from the second ROI of previous execution of the method etc.

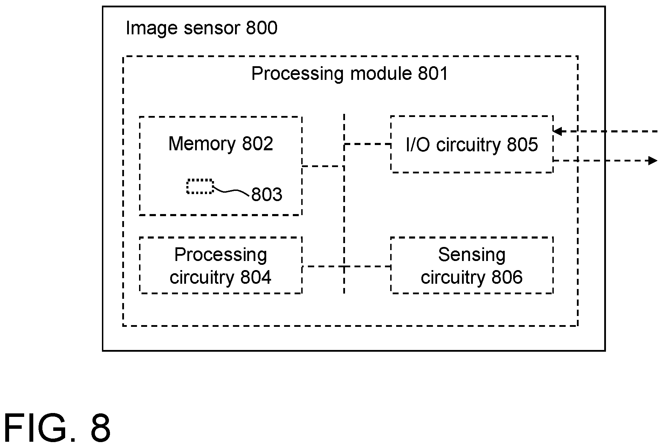

**Figure 8** is a schematic block diagram for illustrating embodiments of how an image sensor 800 may be configured to perform the first method and actions described in relation to Figure 7. The image sensor 800, or image sensing device, or more generally simply one or more devices, may correspond to devices(s) already mentioned in the above for performing embodiments herein, such as for performing the method and/or actions described in relation to Figure 7. The image sensor 800 may correspond to any one of the image sensors 331 or 631. What is shown in Figure 8 may be considered a different view of how the image sensor 331 may be configured. Hence:
The image sensor 800 may comprise a processing module 801, such as processing means, one or more hardware modules, including e.g. one or more processing circuits, circuitry, such as processors, and/or one or more software modules for performing said method and/or actions.

The image sensor 800 may further comprise memory 802 that may comprise, such as contain or store, a computer program 803. The computer program 803 comprises 'instructions' or 'code' directly or indirectly executable by the image sensor 800 to perform said method and/or actions. The memory 802 may comprise one or more memory units and may further be arranged to store data, such as configurations, data and/or values, involved in or for performing functions and actions of embodiments herein.

Moreover, the image sensor 800 may comprise processing circuitry 804 involved in processing and e.g. encoding data, as exemplifying hardware module(s) and may comprise or correspond to one or more processors or processing circuits. The processing module(s) 801 may comprise, e.g. 'be embodied in the form of' or 'realized by' the processing circuitry 804. In these embodiments, the memory 802 may comprise the computer program 803 executable by the processing circuitry 804, whereby the image sensor 800 is operative, or configured, to perform said method and/or actions.

The image sensor 800, e.g. the processing module(s) 801, may comprise Input/Output (I/O) module(s) 805, configured to be involved in, e.g. by performing, any communication to and/or from other units and/or devices, such as sending and/or receiving information to and/or from other devices. The I/O module(s) 805 may be exemplified by obtaining, e.g. receiving, module(s) and/or providing, e.g. sending, module(s), when applicable.

Additionally, the image sensor 800 would typically comprise sensing circuitry 806 as exemplifying hardware module(s), involved in sensing light and/or images, for example fully or partly corresponding to or comprising what was discussed above regarding the image sensor 331, including for example an image sensing area, such as the image sensing area 351.

Further, in some embodiments, the image sensor 800, e.g. the processing module(s) 801, comprises one or more of obtaining module(s), determining module(s), exposing module(s), providing module(s), as exemplifying hardware and/or software module(s) for carrying out actions of embodiments herein. These modules may be fully or partly implemented by the processing circuitry 804.

Hence:
The image sensor 800, and/or the processing module(s) 801, and/or the processing circuitry 804, and/or the determining module(s), are operative, or configured, to, determine said second ROI, the ROI2, according to said predetermined relation that the ROI2 shall have to the first ROI, ROI1.

The image sensor 800, and/or the processing module(s) 801, and/or the processing circuitry 804, and/or the exposing module(s), are operative, or configured, to, expose said at least image sensor pixels of the ROI2 to the second exposure, whereby at least said image sensor pixels of the ROI2 attain said second pixel values.

The image sensor 800, and/or the processing module(s) 801, and/or the processing circuitry 804, and/or the I/O module(s) 805, and/or the providing module(s), are operative, or configured, to provide using the ROI2, said second pixels values of the image sensor pixels of the ROI2 for said further processing by the image sensor.

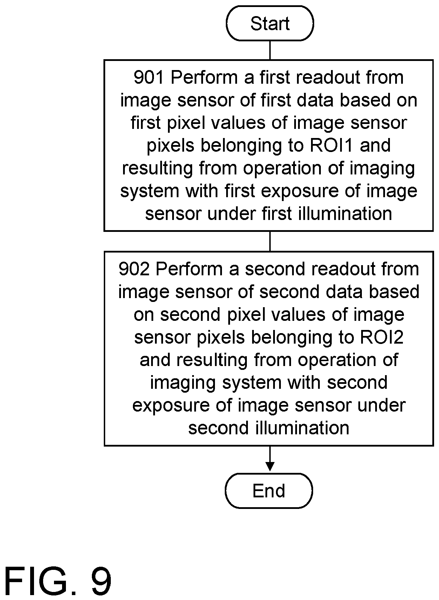

**Figure 9** is a flowchart for schematically illustrating and exemplifying a second method according to embodiments herein, indicated above, but here disclosed in some further detail. The method is preferably performed by a light triangulation based 3D imaging system, such as the imaging system 605. The actions below, which may form the method, are for, or in other words concern, data readout from such imaging system. In the following, the imaging system 605 will be used as a non-limiting example of the imaging system. The imaging system 605 is for 3D imaging of an object, for example the object 620, and comprises a camera, such as the camera 630, with image sensor, for example any one of the image sensors 331, 631, 800, and one or more light sources, such as the light sources 610, 640, for providing one or more illuminations of the object 620 during the imaging. In other words, the image sensor should be one configured to perform as described above and according to some embodiments herein. In the following, to simplify understanding, the image sensor and parts thereof will be referred to using the same exemplifying reference numerals as used above for the image sensor.

Note that the actions below may be taken in any suitable order and/or be carried out fully or partly overlapping in time when this is possible and suitable.

### Action 901

The imaging system 605 performs a first readout of first data from the image sensor 631. The first data being is based on said first pixel values of the image sensor pixels of the first ROI, ROI1, for example ROI1 365. The first pixel values resulting from operation of the imaging system 605 including the image sensor 631 such that said first exposure of the image sensor was under a first illumination of the object 620 provided by said one or more light sources, for example from the light source 610.

### Action 901

The imaging system 605 performs a second readout of second data from the image sensor 631. The second data is based on said second pixel values of the image sensor pixels of the second ROI, ROI2, for example ROI2 465. The second pixel values resulting from operation of the imaging system 605 including the image sensor such that said second exposure of the image sensor was under a second illumination of the object 620 provided by said one or more light sources, for example the light source 640.

As should be realized from the introductory discussion above regarding embodiments herein, the second illumination is preferably different from the first illumination. However, in some embodiments same illumination may be used, for 3D imaging and thereafter for 2D imaging as a different and separate imaging.

Moreover, the first illumination preferably comprises light used in said light triangulation based 3D imaging. Hence, the first illumination may be as described above for such system, such as light conventionally used in 3D imaging based on light triangulation, for example a light plane, or light edge, projected as a light line on the object 620. The light firming the first illumination, such as the light 611, may thus be laser or light from LEDs, for example high intensity LEDs, including for example micro LEDs.

The second illumination may comprise light for providing 2D related information about the object 620 based on that second illumination surface reflections from the object are captured by the camera 630 and image sensor, wheerby 2D related information about the object 620 becomes comprised in said second pixel values.

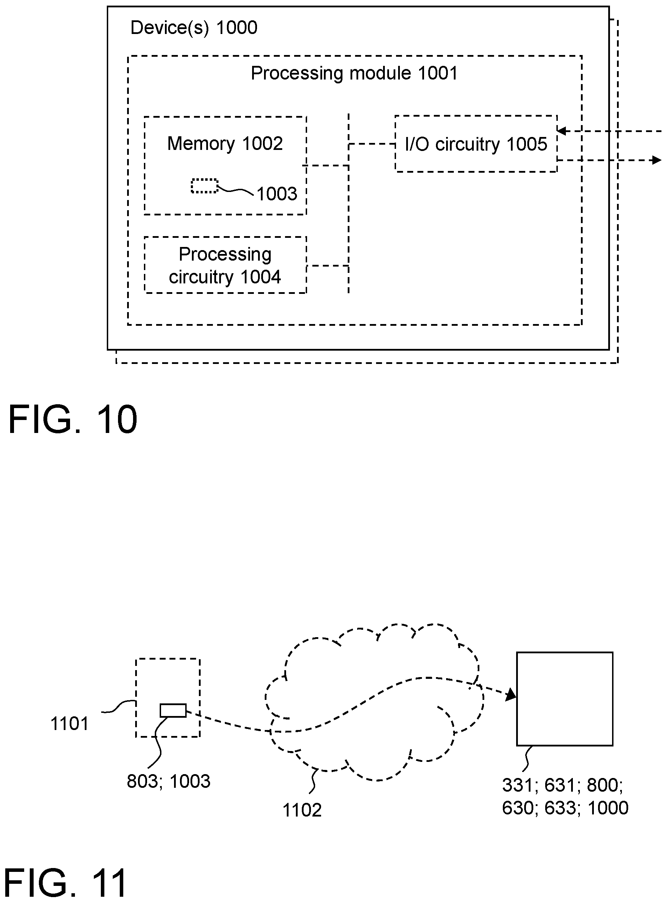

**Figure 10** is a schematic block diagram for illustrating embodiments of one or more devices 1000, i.e. device(s) 1000, part of an imaging system, that may correspond to one or more devices(s) of the 3D imaging system 605, and how the device(s) 1000 may be configured to control and/or make the 3D imaging system 605 to perform the second method and/or actions described above in relation to Figure 9.

For example, the device(s) 1000 may comprise or correspond to the camera 630 and/or computing device 633, but need not be limited to a single device since, as should be realized, more than one device typically provides functionality involved when an imaging system as the 3D imaging system 605 is operated and may be involved in control of the imaging system to make it perform as described above in relation to Figure 9.

The device(s) 1000 may comprise processing module(s) 1001, such as processing means, one or more hardware modules, including e.g. one or more processing circuits, circuitry, such as processors, and/or one or more software modules for performing said method and/or actions.

The device(s) 1000 may further comprise memory/ies 1002 that may comprise, such as contain or store, computer program(s) 1003. The computer program(s) 1003 comprises 'instructions' or 'code' directly or indirectly executable by the device(s) 1000, respectively, to perform said method and/or actions. The memory/ies 1002 may comprise one or more memory units and may further be arranged to store data, such as configurations, data and/or values, involved in or for performing functions and actions of embodiments herein.

Moreover, respective device 1000 may comprise processing circuitry 1004 involved in processing and e.g. encoding data, as exemplifying hardware module(s) and may comprise or correspond to one or more processors or processing circuits. The processing module(s) 1001 may comprise, e.g. 'be embodied in the form of' or 'realized by' such processing circuitry 1004. In these embodiments, the memory 1002 may comprise the computer program(s) 1003 respectively executable by processing circuitry 1004, whereby respective device 900 is operative, or configured, to perform said method and/or actions thereof.

Typically the device(s) 1000, e.g. the processing module(s) 1001, comprises Input/Output (I/O) module(s) 1005, configured to be involved in, e.g. by performing, any communication to and/or from other units and/or devices, such as sending and/or receiving information to and/or from other devices. The I/O module(s) 1005 may be exemplified by obtaining, e.g. receiving, module(s) and/or providing, e.g. sending, module(s), when applicable.

Further, in some embodiments, the device(s) 1000, e.g. the processing module(s) 1001, comprises one or more of obtaining module(s), controlling module(s), performing module(s), exposing module(s), as exemplifying hardware and/or software module(s) for carrying out actions of embodiments herein. These modules may be fully or partly implemented by processing circuitry 1004.

Hence:
The device(s) 1000, and/or the processing module(s) 1001, and/or processing circuitry 1004, and/or the I/O module(s) 1005, and/or the performing module(s), is/are operative, or configured, to, perform said first readout of the first data from the image sensor and perform said second readout of the second data from the image sensor.

**Figure 11** is a schematic drawing illustrating some embodiments relating to the computer program 803 and/or computer program(s) 1003 and carriers thereof to cause said image sensor 800 and/or device(s) 1000 discussed above to perform said methods and actions or make them be performed.

Respective computer program 803, 1003 comprises instructions that when executed by suitable processing circuitry, such as the processing circuitry 804, 1004 and/or processing module, such as processing module 801, 1001, cause the image sensor 800 and/or 3D imaging system 605 to perform as described above. In some embodiments there is provided one or more carriers, that is carrier(s), or more specifically data carrier(s), such as computer program product(s), comprising the computer program(s). Respective carrier(s) may be one of an electronic signal, an optical signal, a radio signal, and a computer readable storage medium, e.g. a computer readable storage medium 1101 as schematically illustrated in the figure. The computer program(s) may thus be stored on the computer readable storage medium 1101. By carrier may be excluded a transitory, propagating signal and the data carrier may correspondingly be named non-transitory data carrier. Non-limiting examples of the data carrier being a computer readable storage medium is a memory card or a memory stick, a disc storage medium or a mass storage device that typically is based on hard drive(s) or Solid State Drive(s) (SSD). The computer readable storage medium 1101 may be used for storing data accessible over a computer network 1102, e.g. the Internet or a Local Area Network (LAN). The computer program(s) may furthermore be provided as pure computer program(s) or comprised in a file or files. The file or files may be stored on the computer readable storage medium 1101 and for example be available through download, for example over the computer network 1102 as indicated in the figure, such as via a server. The server may be a web or File Transfer Protocol (FTP) based server, or similar. The file or files may be executable files for direct or indirect download to and execution on the image sensor 800 and/or said device(s) 1000, e.g. by execution by suitable respective processing circuitry. The file or files may also or alternatively be for intermediate download and compilation involving the same or another processor(s) to make them executable before further download and execution causing said image sensor 800 and/or the imaging system 605 to perform as described above.

Note that any processing module(s) and circuit(s) mentioned in the foregoing may be implemented as a software and/or hardware module, e.g. in existing hardware and/or as an Application Specific Integrated Circuit (ASIC), a Field-Programmable Gate Array (FPGA) or the like. Also note that any hardware module(s) and/or circuit(s) mentioned in the foregoing may e.g. be included in a single ASIC or FPGA, or be distributed among several separate hardware components, whether individually packaged or assembled into a System-on-a-Chip (SoC).

Those skilled in the art will also appreciate that the modules and circuitry discussed herein may refer to a combination of hardware modules, software modules, analog and digital circuits, and/or one or more processors configured with software and/or firmware, e.g. stored in memory, that, when executed by the one or more processors may make the device(s), sensor(s) etc. to be configured to and/or to perform the above-described methods and actions.

Identification by any identifier herein may be implicit or explicit. The identification may be unique in a certain context, e.g. for a certain computer program or program provider.

As used herein, the term "memory" may refer to a data memory for storing digital information, typically a hard disk, a magnetic storage, medium, a portable computer diskette or disc, flash memory, Random Access Memory (RAM) or the like. Furthermore, the memory may be an internal register memory of a processor.

Also note that any enumerating terminology such as first device, second device, first surface, second surface, etc., should as such be considered non-limiting and the terminology as such does not imply a certain hierarchical relation. Without any explicit information in the contrary, naming by enumeration should be considered merely a way of accomplishing different names.

As used herein, the expression "configured to" may mean that a processing circuit is configured to, or adapted to, by means of software or hardware configuration, perform one or more of the actions described herein.

As used herein, the terms "number" or "value" may refer to any kind of digit, such as binary, real, imaginary or rational number or the like. Moreover, "number" or "value" may be one or more characters, such as a letter or a string of letters. Also, "number" or "value" may be represented by a bit string.

As used herein, the expression "may" and "in some embodiments" has typically been used to indicate that the features described may be combined with any other embodiment disclosed herein.

In the drawings, features that may be present in only some embodiments are typically drawn using dotted or dashed lines.

When using the word "comprise" or "comprising" it shall be interpreted as nonlimiting, i.e. meaning "consist at least of".

The embodiments herein are not limited to the above described embodiments. Various alternatives, modifications and equivalents may be used. Therefore, the above embodiments should not be taken as limiting the scope of the present disclosure, which is defined by the appending claims.

## Claims

1. A method, performed by an image sensor (331; 631; 800), for provision of pixels values of image sensor pixels of a second Region Of Interest, ROI, (465; 465'; 565) based on a first ROI (365; 365'), wherein the first ROI (365; 365') has been used by the image sensor (331; 631; 800) to provide first pixel values of image sensor pixels of the first ROI (365; 365') resulting from a first exposure of at least the image sensor pixels of the first ROI, respective one of said ROIs partly covering a total of image sensor pixels and thereby partly covering an image sensing area (361) of the image sensor (331; 631; 800) comprising said total of image sensor pixels, wherein the method comprises:
- determining (702) said second ROI (465; 465'; 565) according to a predetermined relation that the second ROI (465; 465'; 565) shall have to the first ROI (365; 365'),
- exposing (703) at least image sensor pixels of the second ROI (465; 465'; 565) to a second exposure, whereby at least said image sensor pixels of the second ROI (465; 465'; 565) attain second pixel values;
- providing (704), using the second ROI (465; 465'; 565), second pixels values of image sensor pixels of the second ROI (465; 465'; 565) for further processing by the image sensor (331; 631; 800).

2. The method as claimed in claim 1, wherein the predetermined relation is that the second ROI (465; 465'; 565) is shaped as the first ROI (365; 365') but positioned on the image sensing area (361) with a certain offset relative to the first ROI (365; 365') and thereby covering at least some image sensor pixels that are different than those covered by the first ROI.

3. The method as claimed in claim 1 or 2, wherein the predetermined relation is that the second ROI (465; 465'; 565) is shaped as the first ROI (365; 365') but with certain reduced or increased extension along a certain direction on the image sensing area (351) such that the second ROI (465; 465'; 565) covers more or less pixels along said certain direction than the first ROI (365; 365').

4. The method as claimed in claim 1, wherein the predetermined relation is that the second ROI (465; 465'; 565) is a copy of the first ROI and thereby covering the same image sensor pixels as the first ROI (365; 365').

5. The method as claimed in an one of claims 1-4, wherein the first ROI (365; 365') was determined by the image sensor (331; 631; 800) to cover image sensor pixels based on their first pixel values.

6. The method as claimed in an one of claims 1-5, wherein the first ROI (365; 365') was determined by the image sensor (331; 631; 800) to, along a respective pixel line of the image sensing area (361), cover a respective intensity peak resulting from said first exposure.

7. The method as claimed in claim 6, wherein the first ROI (365; 365') was determined by the image sensor (331; 631; 800) to cover the same number of pixels in the respective pixel line around said respective intensity peak in the respective pixel line.

8. Image sensor (331; 631; 800) for provision of pixels values of image sensor pixels of a second Region Of Interest, ROI, (465; 465'; 565) based on a first ROI (365; 365'), wherein the first ROI (365; 365') has been used by the image sensor (331; 631; 800) to provide first pixel values of image sensor pixels of the first ROI (365; 365') resulting from a first exposure of at least the image sensor pixels of the first ROI, respective one of said ROIs partly covering a total of image sensor pixels and thereby partly covering an image sensing area (361) of the image sensor (331; 631; 800) comprising said total of image sensor pixels, wherein the image sensor (331; 631; 800) is configured to:
determine (702) said second ROI (465; 465'; 565) according to a predetermined relation that the second ROI (465; 465'; 565) shall have to the first ROI (365; 365');
expose (703) at least image sensor pixels of the second ROI (465; 465'; 565) to a second exposure, whereby at least said image sensor pixels of the second ROI (465; 465'; 565) attain second pixel values; and
provide (704), using the second ROI (465; 465'; 565), second pixels values of image sensor pixels of the second ROI (465; 465'; 565) for further processing by the image sensor (331; 631; 800).

9. A method, performed by a light triangulation based three-dimensional, 3D, imaging system (605), for data readout from said imaging system, (605), wherein the imaging system (605) is for 3D imaging of an object (620) and comprises a camera (630) with image sensor (331; 631; 800) as claimed in claim 8 and one or more light sources (610, 640) for providing one or more illuminations of the object (620) during the imaging, wherein the method comprises:
- performing (901) a first readout of first data from the image sensor (331; 631; 800), said first data being based on said first pixel values of the image sensor pixels of the first ROI (365; 365') wherein the first pixel values are resulting from operation of the imaging system (605) including the image sensor (331; 631; 800) such that said first exposure of the image sensor (331; 631; 800) was under a first illumination of the object (620) provided by said one or more light sources (610, 640), and
- performing (902) a second readout of second data from the image sensor (331; 631; 800), said second data being based on said second pixel values of the image sensor pixels of the second ROI (465; 465'; 565) wherein the second pixel values are resulting from operation of the imaging system (605) including the image sensor (331; 631; 800) such that said second exposure of the image sensor (331; 631; 800) was under a second illumination of the object (620) provided by said one or more light sources (610, 640).

10. The method as claimed in claim 9, wherein the second illumination is different from the first illumination.

11. The method as claimed in any one of claims 9-10, wherein the first illumination comprises light used in said light triangulation based 3D imaging.

12. The method as claimed in any one of claims 9-11, wherein the second illumination comprises light for providing two-dimensional, 2D, related information about the object (620) based on that second illumination surface reflections from the object are captured by the camera (630) and image sensor (331; 631; 800) and thereby 2D related information about the object (620) becomes comprised in said second pixel values.

13. Imaging system (605) for three-dimensional, 3D, imaging of an object (620) based on light triangulation, for providing a second readout of second pixel values in relation to a first readout of first pixels values, wherein the imaging system (605) comprises a camera (630) with image sensor (331; 631; 800) as claimed in claim 8 and one or more light sources (610, 640) for providing one or more illuminations of the object (620), wherein the imaging system (605) is configured to:
perform (901) a first readout of first data from the image sensor (331; 631; 800), said first data being based on said first pixel values of the image sensor pixels of the first ROI (365; 365') wherein the first pixel values are resulting from operation of the imaging system (605) including the image sensor (331; 631; 800) such that said first exposure of the image sensor (331; 631; 800) was under a first illumination of the object (620) provided by said one or more light sources (610, 640); and
perform (902) a second readout of second data from the image sensor (331; 631; 800), said second data being based on said second pixel values of the image sensor pixels of the second ROI (465; 465'; 565) wherein the second pixel values are resulting from operation of the imaging system (605) including the image sensor (331; 631; 800) such that said second exposure of the image sensor (331; 631; 800) was under a second illumination of the object (620) provided by said one or more light sources (610, 640).

14. One or more computer programs (803; 1003) comprising instructions that when executed by one or more processors causes said image sensor (331; 631; 800) according to claim 8 and/or said imaging system (605) according to claim 13 to perform the method according to any one of claims 1-7 and/or the method according to any one of claims 9-12.

15. One or more carriers comprising the one or more computer programs (803; 1003) according to claim 14, wherein the one or more carriers are one or more of the following: electronic signal, optical signal, radio signal or computer readable storage medium (1101).

## Amended claims

### Amended claims in accordance with Rule 137(2) EPC.

1. A method, performed by a light triangulation based three-dimensional, 3D, imaging system (605), for data readout from said imaging system, (605), wherein the imaging system (605) is for 3D imaging of an object (620) and comprises a camera (630) with an image sensor (331; 631; 800) and one or more light sources (610, 640) for providing one or more illuminations of the object (620) during the imaging, wherein the image sensor (331; 631; 800) is for provision of pixels values of image sensor pixels of a second Region Of Interest, ROI, (465; 465'; 565) based on a first ROI (365; 365'), wherein the first ROI (365; 365') has been used by the image sensor (331; 631; 800) to provide first pixel values of image sensor pixels of the first ROI (365; 365') resulting from a first exposure of at least the image sensor pixels of the first ROI, respective one of said ROls partly covering a total of image sensor pixels and thereby partly covering an image sensing area (351) of the image sensor (331; 631; 800) comprising said total of image sensor pixels, wherein the image sensor (331; 631; 800) is configured to:
determine (702) said second ROI (465; 465'; 565) according to a predetermined relation that the second ROI (465; 465'; 565) shall have to the first ROI (365; 365');
expose (703) at least image sensor pixels of the second ROI (465; 465'; 565) to a second exposure, whereby at least said image sensor pixels of the second ROI (465; 465'; 565) attain second pixel values; and
provide (704), using the second ROI (465; 465'; 565), second pixels values of image sensor pixels of the second ROI (465; 465'; 565) for further processing by the image sensor (331; 631; 800),
wherein the method comprises:
- performing (901) a first readout of first data from the image sensor (331; 631; 800), said first data being based on said first pixel values of the image sensor pixels of the first ROI (365; 365') wherein the first pixel values are resulting from operation of the imaging system (605) including the image sensor (331; 631; 800) such that said first exposure of the image sensor (331; 631; 800) was under a first illumination of the object (620) provided by said one or more light sources (610, 640), and
- performing (902) a second readout of second data from the image sensor (331; 631; 800), said second data being based on said second pixel values of the image sensor pixels of the second ROI (465; 465'; 565) wherein the second pixel values are resulting from operation of the imaging system (605) including the image sensor (331; 631; 800) such that said second exposure of the image sensor (331; 631; 800) was under a second illumination of the object (620) provided by said one or more light sources (610, 640), wherein the second illumination comprises light for providing two-dimensional, 2D, related information about the object (620) based on that second illumination surface reflections from the object are captured by the camera (630) and image sensor (331; 631; 800) and thereby 2D related information about the object (620) becomes comprised in said second pixel values.

2. The method as claimed in claim 1, wherein the predetermined relation is that the second ROI (465; 465'; 565) is shaped as the first ROI (365; 365') but positioned on the image sensing area (351) with a certain offset relative to the first ROI (365; 365') and thereby covering at least some image sensor pixels that are different than those covered by the first ROI.

3. The method as claimed in claim 1 or 2, wherein the predetermined relation is that the second ROI (465; 465'; 565) is shaped as the first ROI (365; 365') but with certain reduced or increased extension along a certain direction on the image sensing area (351) such that the second ROI (465; 465'; 565) covers more or less pixels along said certain direction than the first ROI (365; 365').

4. The method as claimed in claim 1, wherein the predetermined relation is that the second ROI (465; 465'; 565) is a copy of the first ROI and thereby covering the same image sensor pixels as the first ROI (365; 365').

5. The method as claimed in an one of claims 1-4, wherein the first ROI (365; 365') was determined by the image sensor (331; 631; 800) to cover image sensor pixels based on their first pixel values.

6. The method as claimed in an one of claims 1-5, wherein the first ROI (365; 365') was determined by the image sensor (331; 631; 800) to, along a respective pixel line of the image sensing area (351), cover a respective intensity peak resulting from said first exposure.

7. The method as claimed in claim 6, wherein the first ROI (365; 365') was determined by the image sensor (331; 631; 800) to cover the same number of pixels in the respective pixel line around said respective intensity peak in the respective pixel line.

8. The method as claimed in any one of claims 1-7, wherein the second illumination is different from the first illumination.

9. The method as claimed in any one of claims 1-8, wherein the first illumination comprises light used in said light triangulation based 3D imaging.

10. Imaging system (605) for three-dimensional, 3D, imaging of an object (620) based on light triangulation, for providing a second readout of second pixel values in relation to a first readout of first pixels values, wherein the imaging system (605) comprises a camera (630) with an image sensor (331; 631; 800) and one or more light sources (610, 640) for providing one or more illuminations of the object (620), wherein the image sensor (331; 631; 800) is for provision of pixels values of image sensor pixels of a second Region Of Interest, ROI, (465; 465'; 565) based on a first ROI (365; 365'), wherein the first ROI (365; 365') has been used by the image sensor (331; 631; 800) to provide first pixel values of image sensor pixels of the first ROI (365; 365') resulting from a first exposure of at least the image sensor pixels of the first ROI, respective one of said ROIs partly covering a total of image sensor pixels and thereby partly covering an image sensing area (351) of the image sensor (331; 631; 800) comprising said total of image sensor pixels, wherein the image sensor (331; 631; 800) is configured to:
determine (702) said second ROI (465; 465'; 565) according to a predetermined relation that the second ROI (465; 465'; 565) shall have to the first ROI (365; 365');
expose (703) at least image sensor pixels of the second ROI (465; 465'; 565) to a second exposure, whereby at least said image sensor pixels of the second ROI (465; 465'; 565) attain second pixel values; and
provide (704), using the second ROI (465; 465'; 565), second pixels values of image sensor pixels of the second ROI (465; 465'; 565) for further processing by the image sensor (331; 631; 800), wherein the imaging system (605) is configured to:
perform (901) a first readout of first data from the image sensor (331; 631; 800), said first data being based on said first pixel values of the image sensor pixels of the first ROI (365; 365') wherein the first pixel values are resulting from operation of the imaging system (605) including the image sensor (331; 631; 800) such that said first exposure of the image sensor (331; 631; 800) was under a first illumination of the object (620) provided by said one or more light sources (610, 640); and
perform (902) a second readout of second data from the image sensor (331; 631; 800), said second data being based on said second pixel values of the image sensor pixels of the second ROI (465; 465'; 565) wherein the second pixel values are resulting from operation of the imaging system (605) including the image sensor (331; 631; 800) such that said second exposure of the image sensor (331; 631; 800) was under a second illumination of the object (620) provided by said one or more light sources (610, 640), wherein the second illumination comprises light for providing two-dimensional, 2D, related information about the object (620) based on that second illumination surface reflections from the object are captured by the camera (630) and image sensor (331; 631; 800) and thereby 2D related information about the object (620) becomes comprised in said second pixel values.

11. One or more computer programs (803; 1003) comprising instructions that when executed by one or more processors causes said imaging system (605) according to claim 10 to perform the method according to any one of claims 1-9.

12. One or more carriers comprising the one or more computer programs (803; 1003) according to claim 11, wherein the one or more carriers are one or more of the following: electronic signal, optical signal, radio signal or computer readable storage medium (1101).
